# EUROPEAN PATENT APPLICATION

(11) **EP 2 503 448 A1**
(43) Date of publication of application: **26.09.2012**
(21) Application number: 09851289.0
(22) Date of filing: 16.11.2009
(51) Int. Cl.: G06F 5/12

(54) **FIFO BUFFER AND METHOD OF CONTROLLING FIFO BUFFER**

(71) Applicant: Fujitsu Limited, Kawasaki-shi, Kanagawa 211-8588 (JP)
(72) Inventor: TANEDA, Masahiro, Kawasaki-shi Kanagawa 211-8588 (JP)
(74) Representative: Holz, Ulrike
(86) International application number: PCT/JP2009/069454
(87) International publication number: WO 2011/058659

(57) **Abstract**

A first-in first-out buffer (1) includes: a packet storage buffer (10) capable of writing and reading data within one cycle by combining a plurality of memories, each memory performing any one of writing and reading of data within one cycle; a bank switch (17) that outputs a W_bank signal indicating a memory included in the packet storage buffer (10), the memory being capable of writing data; a packet writing control circuit (15) that performs writing control of data to be written to the memory indicated by the W_bank signal when the data to be written is inputted; and a packet writing beginning bank holding FIFO queue (19) that, in accordance with a queue writing signal "1" from the packet writing control circuit (15), holds the W_bank signal that is outputted from the bank switch (17) and indicates the memory in which head data of the data to be written is written.

## Description

### FIELD

The present invention relates to a FIFO buffer and a method of controlling a FIFO buffer.

### BACKGROUND

Conventionally, there has been known a FIFO buffer that simultaneously performs writing and reading of data within one cycle. When a flip-flop and a register file capable of reading and writing data within one cycle are used in order to achieve this FIFO buffer, a buffer capacity per a physical area (e.g., 1 square millimeter) is small.

Therefore, there is a method using a RAM (Random Access Memory) to achieve a large-capacity FIFO buffer with a small physical area (e.g. see Patent Document 1). However, the RAM cannot perform reading hold data and writing new data in the period of one cycle. Therefore, devisal is needed for achieving a FIFO buffer that performs reading and writing of data in free timing.

Hereinafter, a description will be given of a conventional FIFO buffer that uses the RAM.

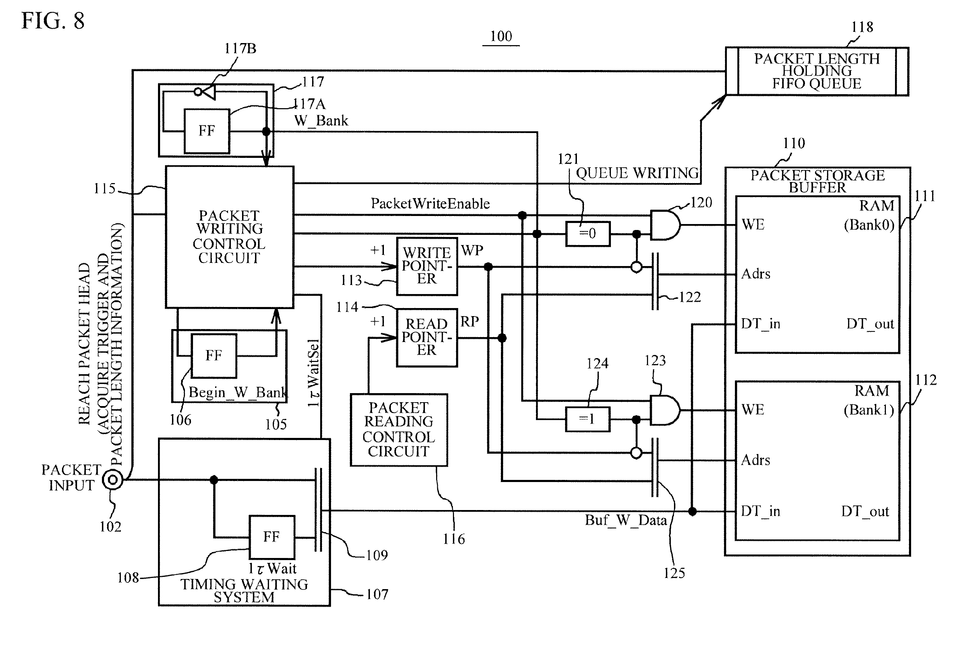

FIG. 8 is a diagram illustrating schematic configuration of the conventional FIFO buffer.

A FIFO buffer 100 in FIG. 8 includes a packet input terminal 102, RAMs (Random Access Memory) 111 and 112, a write pointer 113, a read pointer 114, and a packet writing control circuit 115. The FIFO buffer 100 includes a packet reading control circuit 116, a bank switch 117, and a packet length holding FIFO queue 118. Moreover, the FIFO buffer 100 includes a writing beginning bank instruction unit 105, and a timing waiting system 107. The FIFO buffer 100 includes AND circuits 120 and 123, detection circuits 121 and 124, and selectors 122 and 125. The RAMs 111 and 112 constitute a packet storage buffer 110, and are comprised of a bank style. Here, the RAM 111 is a bank "0", and the RAM 112 is a bank "1". The RAMs 111 and 112 alternately perform writing and reading of a packet for each cycle, namely, perform interleaving operation.

The write pointer 113 holds a writing position of a packet in the packet storage buffer 110. The read pointer 114 holds a reading position of a packet in the packet storage buffer 110. The packet writing control circuit 115 controls writing of the packet to the RAM 111 or 112, and outputs a packet writing signal (write enable). The packet reading control circuit 116 controls reading of the packet from the RAM 111 or 112. The bank switch 117 includes a flip-flop circuit 1117A and an inverter 117B, and outputs a signal (W_Bank signal) indicating the RAM capable of writing the packet therein, i.e., the bank. When the W_Bank signal is "0", a bank capable of writing the packet therein is the bank "0", i.e., the RAM 111. On the contrary, when the W_Bank signal is "1", a bank capable of writing the packet therein is the bank "1", i.e., the RAM 112.

The writing beginning bank instruction unit 105 includes a flip-flop circuit 106. The flip-flop circuit 106 outputs a Begin_W_Bank signal for designating a bank that writes head data of the packet. When the Begin_W_Bank signal is "0", the bank for writing in the head data of the packet is the bank "0", i.e., the RAM 111. On the contrary, when the Begin_W_Bank signal is "1", the bank for writing in the head data of the packet is the bank "1", i.e., the RAM 112.

The timing waiting system 107 includes a flip-flop circuit 108 and a selector 109. The flip-flop circuit 108 holds actual data of a packet input from the packet input terminal 102, and delays output timing by one cycle (1τ). The selector 109 is a circuit for selecting an input destination of the actual data of the packet. The selector 109 receives a 1τWaitSel signal for selecting the input destination of the actual data of the packet, from the packet writing control circuit 115. When the selector 109 has received the 1τWaitSel signal "1", the selector 109 outputs the actual data of the packet held in the flip-flop circuit 108 as a Buf_W_Data signal to the packet storage buffer 110. When the selector 109 has received the 1τWaitSel signal "0", the selector 109 outputs the actual data of the packet input from the packet input terminal 102 as a Buf_W_Data signal to the packet storage buffer 110.

In the FIFO buffer 100, it is premised on packing and storing packets in both banks so that space areas do not occur in both banks of the packet storage buffer 110. Therefore, when end data of the packet is written in the packet storage buffer 110, the packet writing control circuit 115 rewrites a value of the Begin_W_Bank signal which the writing beginning bank instruction unit 105 outputs, to a value indicative of an opposite bank to the bank in which the end data is written.

The packet length holding FIFO queue 118 holds a value indicative of a packet length of the packet input from the packet input terminal 102. The held value indicative of the packet length is used when the packet reading control circuit 116 reads out a packet to be read from the RAM 111 or 112.

When the W_Bank signal is "0", i.e., the detection circuit 121 detects that the W_Bank signal is "0", the detection circuit 121 outputs "1". When the W_bank signal is "1", i.e., the detection circuit 121 detects that the W_Bank signal is "1", the detection circuit 121 outputs "0". When the W_Bank signal is "1", i.e., the detection circuit 124 detects that the W_Bank signal is "1", the detection circuit 124 outputs "1". When the W_Bank signal is "0", i.e., the detection circuit 124 detects that the W_Bank signal is "0", the detection circuit 124 outputs "0". The selector 122 selects information to be output according to the output of the detection circuit 121. Specifically, when the detection circuit 121 outputs "1", the selector 122 selects an address WP from the write pointer 113. When the detection circuit 121 outputs "0", the selector 122 selects an address RP from the read pointer 114. Similarly, the selector 125 selects information to be output according to the output of the detection circuit 124. Specifically, when the detection circuit 124 outputs "1", the selector 125 selects the address WP from the write pointer 113. When the detection circuit 124 outputs "0", the selector 125 selects the address RP from the read pointer 114.

When the W_Bank signal "0" from the bank switch 117 and the write enable signal (Write Enable) from the packet writing control circuit 115 are input to the AND circuit 120, the write enable signal is input to a WE port of the RAM 111. At this time, the selector 122 inputs the address WP from the write pointer 113, to an address (Adrs) port of the RAM 111. The packet (actual data) output from the timing waiting system 107 is written in the address of the RAM 111 which the write pointer 113 outputs, via a DT_in port of the RAM 111. On the other hand, the W_Bank signal "1" from the bank switch 117 and the write enable signal (Write Enable) from the packet writing control circuit 115 are input to the AND circuit 123, the write enable signal is input to a WE port of the RAM 112. At this time, the selector 125 inputs the address WP from the write pointer 113, to an address (Adrs) port of the RAM 112. The packet (actual data) output from the timing waiting system 107 is written in the address of the RAM 112 which the write pointer 113 outputs, via a DT_in port of the RAM 112.

A description will be given of writing operation of the packet by the FIFO buffer 100 configured as described above.

It is assumed that the bank switch 117 continuously outputs the W_Bank signal to the packet writing control circuit 115 and the detection circuits 121 and 124. In addition, it is assumed that the writing beginning bank instruction unit 105 continuously outputs the Begin_W_Bank signal to the packet writing control circuit 115.

When the packet is input from the packet input terminal 102, the flip-flop circuit 108 of the timing waiting system 107 holds the actual data of the packet input from the packet input terminal 102. On the other hand, when the packet is input from the packet input terminal 102, the packet writing control circuit 115 acquires a trigger and a value of the packet length included in a header of the packet. At this time, the packet writing control circuit 115 inputs the W_Bank signal from the bank switch 117 and the Begin_W_Bank signal from the writing beginning bank instruction unit 105. The packet writing control circuit 115 determines whether the W_Bank signal from the bank switch 117 is identical with the Begin_W_Bank signal from the writing beginning bank instruction unit 105.

When the W_Bank signal is identical with the Begin_W_Bank signal, the packet writing control circuit 115 outputs the packet writing signal (Write Enable). Any one of the RAM 111 or 112 is in a state where a packet can be written according to the W_Bank signal from the bank switch 117. A writing address is specified by the address from the write pointer 113. When the W_Bank signal is identical with the Begin_W_Bank signal, the packet writing control circuit 115 outputs the 1τWaitSel signal "0" to the selector 109. The selector 109 receives the 1τWaitSel signal "0" from the packet writing control circuit 115, and outputs the actual data of the packet input from the packet input terminal 102 as a Buf_W_Data signal to the packet storage buffer 110. The Buf_W_Data signal is stored into a bank capable of writing the packet.

On the other hand, when the W_Bank signal is not identical with the Begin_W_Bank signal, such a case is timing in which the packet cannot be written, and hence the packet writing control circuit 115 outputs the 1τWaitSel signal "1" to the selector 109. The selector 109 receives the 1τWaitSel signal "1" from the packet writing control circuit 115, and outputs the actual data of the packet which is held in the flip-flop circuit 108 and delayed by one cycle, to the packet storage buffer 110 as the Buf_W_Data signal. The Buf_W_Data signal is stored into a bank capable of writing the packet.

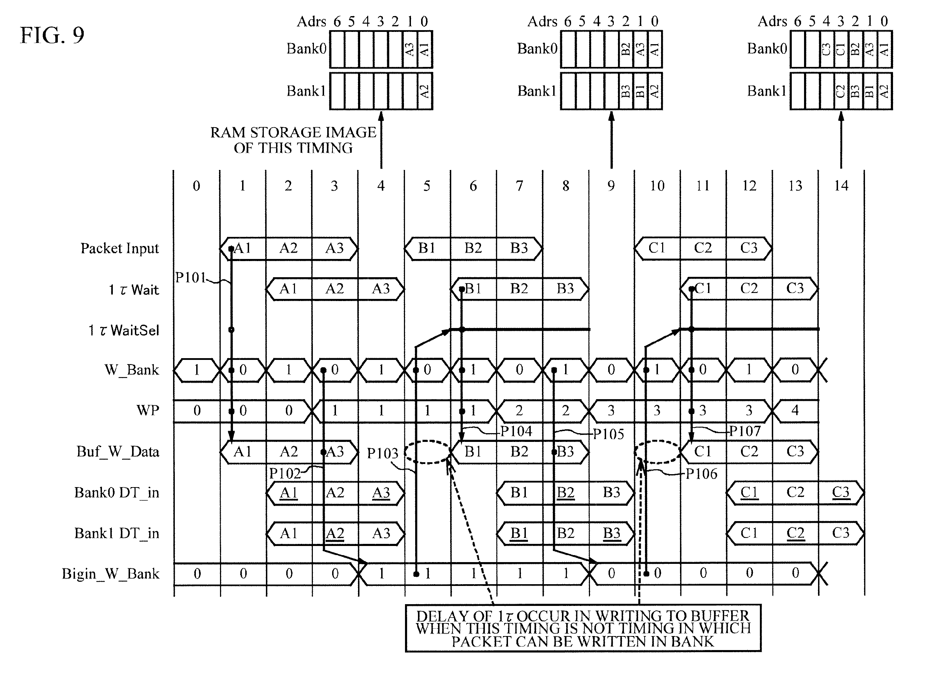

FIG. 9 is a diagram illustrating writing timing of packets in the FIFO buffer 100 of FIG. 8, and a state where the packets are stored into both banks. In the FIFO buffer 100, it is premised on packing and storing packets in both banks so that space areas do not occur in both banks of the packet storage buffer 110, as illustrated in FIG. 9.

Each of numbers "0" to "14" in the highest stage of FIG. 9 illustrates a cycle number. In FIG. 9, three packets each of which has three cycles (A1 to A3, B1 to B3, C1 to C3) are input to the packet input terminal 102. In a first cycle in which head data A1 of a first packet is input, the W_Bank signal is identical with the Begin_W_Bank signal. Therefore, the first packet (A1 to A3) is input from the packet input terminal 102, and is directly output as the Buf_W_Data signal (P101). The head data A1 of the first packet is written in the address "0" of the bank "0" in a second cycle. Next data A2 is written in the address "0" of the bank "1" in a third cycle. End data A3 is written in the address "1" of the bank "0" in a fourth cycle. In Bank 0 DT_in or Bank 1 DT_in of FIG. 9, underlines are added to actual written data. Next, after the end data A3 of the first packet is output as the Buf_W_Data signal, the packet writing control circuit 115 rewrites the value (i.e., "0") of the Begin_W_Bank signal which the writing beginning bank instruction unit 105 outputs, to a value (i.e., "1") indicative of an opposite bank to the bank in which the end data is written (P102).

In a fifth cycle in which head data B 1 of a next packet is input, the W_Bank signal is not identical with the Begin_W_Bank signal (P103). Therefore, the packet writing control circuit 115 outputs the 1τWaitsel signal "1" to the selector 109. Then, the selector 109 outputs the head data B1 of the next packet delayed by one cycle to the packet storage buffer 110 as the Buf_W_Data signal (P 104). The head data B 1 of the next packet is written in the address "1" of the bank "1" in a seventh cycle. Next data B2 is written in the address "2" of the bank "0" in an eighth cycle. End data B3 is written in the address "2" of the bank "1" in a ninth cycle. Next, after the end data B3 of the next packet is output as the Buf_W_Data signal, the packet writing control circuit 115 rewrites the value (i.e., "1") of the Begin_W_Bank signal which the writing beginning bank instruction unit 105 outputs, to a value (i.e., "0") indicative of an opposite bank to the bank in which the end data is written (P105).

Next, in a tenth cycle in which head data C1 of a last packet is input, the W_Bank signal is not identical with the Begin_W_Bank signal (P106). Therefore, the packet writing control circuit 115 outputs the 1τWaitSel signal "1" to the selector 109. Then, the selector 109 outputs the head data C1 of the last packet delayed by one cycle to the packet storage buffer 110 as the Buf_W_Data signal (P107). The head data C of the last packet is written in the address "3" of the bank "0" in a twelfth cycle. Next data C2 is written in the address "3" of the bank "1" in a thirteenth cycle. End data C3 is written in the address "4" of the bank "0" in a fourteenth cycle.

Since only an example in which one packet has an odd cycle length is described in FIG. 9, the Begin_W_Bank signal is alternately switched between "0" and "1". However, when a packet having an even cycle length is written in the FIFO buffer 100, the value of the Begin_W_Bank signal corresponding to a next packet is the same as the value of the Begin_W_Bank signal corresponding to the preceding packet.

### PRIOR ART DOCUMENT

### PATENT DOCUMENT

Patent Document 1: Japanese Laid-open Patent Publication No. 57-55463

### DISCLOSURE OF THE INVENTION

### PROBLEMS TO BE SOLVED BY THE INVENTION

Thus, in the conventional FIFO buffer 100, when the W_Bank signal at the input time of the packet is not identical with the Begin_W_Bank signal at the input time of the packet, the situation where the writing timing of the packet has to wait by one cycle might occur. That is, when timing in which the packet comes in the FIFO buffer 100 is not timing in which the packet can be written in the bank, the timing to start writing of the packet is delayed.

In view of the problem described above, it is an object in one aspect of the embodiment to provide a FIFO buffer and a method of controlling a FIFO buffer that can reduce delay time for writing in data.

### MEANS FOR SOLVING THE PROBLEMS

To achieve the above-mentioned object, a first-in first-out buffer includes: a memory set capable of writing and reading data within one cycle by combining a plurality of memories, each memory performing any one of writing and reading of data within one cycle; an output means that outputs a first signal indicating a memory included in the memory set, the memory being capable of writing data; a writing control means that performs writing control of data to be written to the memory indicated by the first signal when the data to be written is inputted; and a first holding means that, in accordance with an instruction from the writing control means, holds the first signal that is outputted from the output means and indicates the memory in which head data of the data to be written is written.

A method of controlling a first-in first-out buffer including a plurality of memories, the method includes: writing head data of input data in a memory indicated by a first signal among the plurality of memories, the first signal being outputted when data is inputted, the first signal indicating a memory, the memory being capable of writing data; and holding, for each data, a value of the first signal outputted when the data is inputted.

### EFFECTS OF THE INVENTION

The FIFO buffer described hereinafter can reduce delay time for writing in data.

### BRIEF DESCRIPTION OF DRAWINGS

FIG. 1 is a diagram illustrating configuration of a FIFO (First-In First-Out) buffer according to a present embodiment;

FIG. 2 is a diagram illustrating detailed configuration of a packet length holding FIFO queue 18 and a packet writing beginning bank holding FIFO queue 19;

FIG. 3 is a flowchart illustrating writing operation of a packet;

FIG. 4A is a diagram illustrating an example in which a packet having a six-cycles length is input from an packet input terminal 2 and written in RAMs 11 and 12 when a W_Bank signal is "0";

FIG. 4B is a diagram illustrating an example in which a packet having a six-cycles length is input from the packet input terminal 2 and written in the RAMs 11 and 12 when the W_Bank signal is "1";

FIG. 4C is a diagram illustrating an example in which three packets each having a three-cycles length are written in the RAMs 11 and 12;

FIG. 5 is a flowchart illustrating reading operation of a packet;

FIG. 6 is a timing chart illustrating packet writing operation and packet reading operation when two packets each having a three-cycles length are continuously input;

FIG. 7 is a timing chart illustrating packet writing operation and packet reading operation when two packets each having a four-cycles length are continuously input;

FIG. 8 is a diagram illustrating schematic configuration of a conventional FIFO buffer; and

FIG. 9 is a diagram illustrating writing timing of packets in the FIFO buffer of FIG. 8, and a state where the packets are stored into both banks.

### DESCRIPTION OF EMBODIMENTS

A description will be given of embodiments of the invention, with reference to drawings.

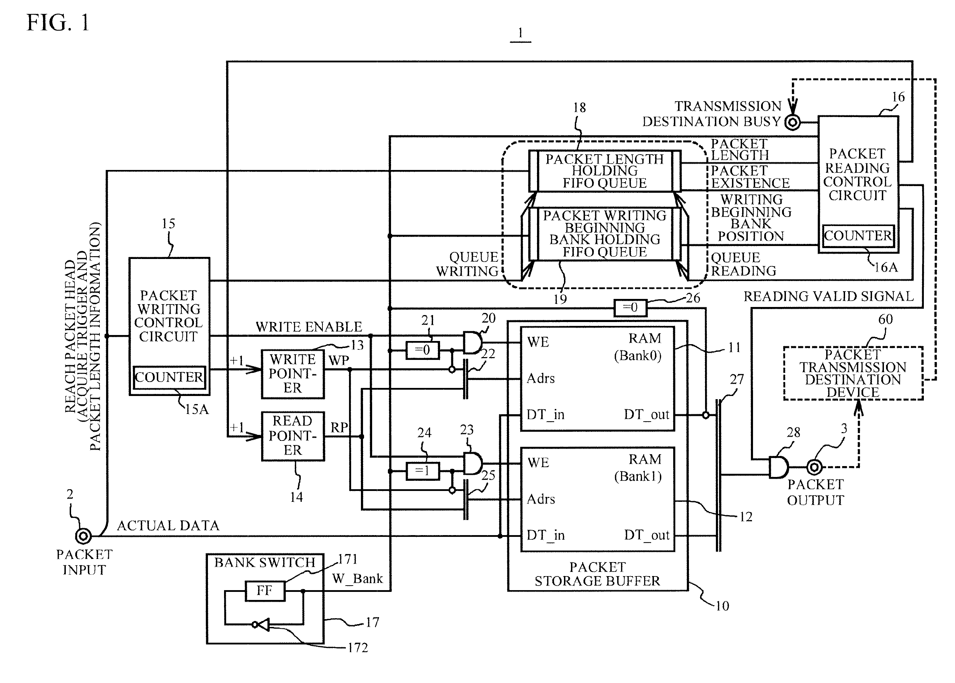

FIG. 1 is a diagram illustrating configuration of a FIFO (First-In First-Out) buffer according to a present embodiment.

A FIFO buffer 1 in FIG. 1 includes RAMs (Random Access Memory) 11 and 12, a write pointer 13, a read pointer 14, and a packet writing control circuit 15 (a writing control means). The FIFO buffer 1 includes a packet reading control circuit 16 (a reading control means) and a bank switch 17 (an output means). In addition, the FIFO buffer 1 includes a packet length holding FIFO queue 18 (a second holding means) and a packet writing beginning bank holding FIFO queue 19 (a first holding means).

The RAMs 11 and 12 constitute a packet storage buffer 10, and are comprised of a bank style. Here, the RAM 11 is a bank "0", and the RAM 12 is a bank "1". The RAMs 11 and 12 alternately perform writing and reading of a packet for each cycle, namely, perform interleaving operation.

The packet is written in or read from the RAM 11 or 12 sequentially from the head of the packet in units of a data bus width of the RAM 11 or 12. For example, when the data bus width of the RAM 11 or 12 is 8 bytes, a packet of 8 bytes is written in or read from the RAM 11 or 12 by one cycle. When a size of the packet is larger than the data bus width of the RAM 11 or 12, the packet is written in or read from the RAM 11 or 12 by n (n=1,2,...) cycle. For example, when the data bus width of the RAM 11 or 12 is 8 bytes and the size of the packet is 40 bytes, the writing or the reading of all the packet is performed by 5cycles. Here, in the packet used in the present embodiment, information indicative of the packet length is added to the head data of the packet.

The write pointer 13 holds a writing position of a packet in the packet storage buffer 10. The read pointer 14 holds a reading position of a packet in the packet storage buffer 10. The packet writing control circuit 15 controls writing of the packet to the RAM 11 or 12, and outputs a packet writing signal (Write Enable). The packet reading control circuit 16 controls reading of the packet from the RAM 11 or 12. The bank switch 17 includes a flip-flop circuit 171 and an inverter 172, and outputs a signal (W_Bank signal) indicating the RAM capable of writing the packet therein, i.e., the bank. When the W_Bank signal is "0", a bank capable of writing the packet therein is the bank "0", i.e., the RAM 11. On the contrary, when the W_Bank signal is "1", a bank capable of writing the packet therein is the bank "1", i.e., the RAM 12.

The packet length holding FIFO queue 18 holds a value indicative of a packet length of the packet input from a packet input terminal 2. The packet writing beginning bank holding FIFO queue 19 holds information of the bank in which the head data of the packet is written for each packet, i.e., a value of the W_Bank signal in timing when the head data of the packet is written.

The FIFO buffer 1 include AND circuits 20 and 23, detection circuits 21, 24 and 26, and selectors 22, 25 and 27. When the W_Bank signal is "0", i.e., the detection circuits 21 and 26 detect that the W_Bank signal is "0", the detection circuits 21 and 26 output "1". When the W_Bank signal is "1", i.e., the detection circuits 21 and 26 detect that the W_Bank signal is "1", the detection circuits 21 and 26 output "0". When the W_Bank signal is "1", i.e., the detection circuit 24 detects that the W_Bank signal is "1", the detection circuit 24 outputs "1". When the W_Bank signal is "0", i.e., the detection circuit 124 detects that the W_Bank signal is "0", the detection circuit 24 outputs "0". The selector 22 selects information to be output according to the output of the detection circuit 21. Specifically, when the detection circuit 21 outputs "1", the selector 22 selects an address WP from the write pointer 13. When the detection circuit 21 outputs "0", the selector 22 selects an address RP from the read pointer 14. Similarly, the selector 25 selects information to be output according to the output of the detection circuit 24. Specifically, when the detection circuit 24 outputs "1", the selector 25 selects the address WP from the write pointer 13. When the detection circuit 24 outputs "0", the selector 25 selects the address RP from the read pointer 14. The selector 27 selects a reading destination of the packet according to the output of the detection circuit 26. Specifically, when the detection circuit 26 outputs "0", the selector 27 selects the bank 1, i.e., the RAM 12 as the reading destination of the packet. When the detection circuit 26 outputs "1", the selector 27 selects the bank 0, i.e., the RAM 11 as the reading destination of the packet.

Here, a description will be given of the operation of the AND circuits 20 and 23, detection circuits 21, 24 and 26, and selectors 22, 25 and 27 when the W_Bank signal is "0".

When the W_Bank signal "0" from the bank switch 17 and the write enable signal (Write Enable) from the packet writing control circuit 15 are input to the AND circuit 20, the write enable signal is input to a WE port of the RAM 11. At this time, the selector 22 inputs the address WP from the write pointer 13, to an address (Adrs) port of the RAM 11. The input packet (actual data) is written in the address of the RAM 11 which the write pointer 13 outputs, via a DT_in port of the RAM 11. On the other hand, when the W_Bank signal from the bank switch 17 is "0", the detection circuit 24 outputs "0" to the selector 25. Thereby, the selector 25 inputs the address RP from the read pointer 14 to the Adrs port of the RAM 12. The packet written in the address RP of the RAM 12 which the read pointer 14 outputs, is output to an output circuit 28 via a DT_out port of the RAM 12 and the selector 27. When the W_Bank signal "0" is output from the bank switch 17 to the detection circuit 26, the detection circuit 26 outputs "1" to the selector 27. The selector 27 reads out the packet from the bank "0", i.e., the RAM 11 according to the output "1" from the detection circuit 26.

Next, a description will be given of the operation of the AND circuits 20 and 23, detection circuits 21, 24 and 26, and selectors 22, 25 and 27 when the W_Bank signal is "1".

When the W_Bank signal "1" from the bank switch 17 and the write enable signal (Write Enable) from the packet writing control circuit 15 are input to the AND circuit 23, the write enable signal is input to a WE port of the RAM 12. At this time, the selector 25 inputs the address WP from the write pointer 13, to the address (Adrs) port of the RAM 12. The input packet (actual data) is written in the address of the RAM 12 which the write pointer 13 outputs, via a DT_in port of the RAM 12. On the other hand, when the W Bank signal from the bank switch 17 is "1", the detection circuit 21 outputs "0" to the selector 22. Thereby, the selector 22 inputs the address RP from the read pointer 14 to the Adrs port of the RAM 11. The packet written in the address RP of the RAM 11 which the read pointer 14 outputs, is output to the output circuit 28 via a DT_out port of the RAM 11 and the selector 27. When the W_Bank signal "1" is output from the bank switch 17 to the detection circuit 26, the detection circuit 26 outputs "0" to the selector 27. The selector 27 reads out the packet from the bank "1", i.e., the RAM 12 according to the output "0" from the detection circuit 26.

It is assumed that the packet is inputted from the packet input terminal 2 without interruption from the head of the packet to the end of the packet.
When the head data of the packet is input from the packet input terminal 2, the packet writing control circuit 15 acquires a trigger indicating that the head data of the packet has arrived, and a value of the packet length. When the packet writing control circuit 15 acquires the trigger, the packet writing control circuit 15 outputs a queue writing signal (specifically, "1") to the packet length holding FIFO queue 18 and the packet writing beginning bank holding FIFO queue 19.

The queue writing signal is a signal indicating an instruction in which the packet length holding FIFO queue 18 holds the value indicative of the packet length included in the head data of the packet, and an instruction in which the packet writing beginning bank holding FIFO queue 19 holds the value of the W_Bank signal when the head data of the packet is input. When the queue writing signal is "1", the packet length holding FIFO queue 18 holds the value indicative of the packet length included in the head data of the packet. When the queue writing signal is "1", the packet writing beginning bank holding FIFO queue 19 holds the value of the W_Bank signal when the head data of the packet is input. When the queue writing signal is "0", the packet length holding FIFO queue 18 does not hold the value indicative of the packet length included in the head data of the packet. When the queue writing signal is "0", the packet writing beginning bank holding FIFO queue 19 does not hold the value of the W_Bank signal when the head data of the packet is input.

When the packet reading control circuit 16 begins reading control of the packet, the packet reading control circuit 16 outputs a queue reading signal (specifically, "1") to the packet length holding FIFO queue 18 and the packet writing beginning bank holding FIFO queue 19. The queue reading signal is a signal indicating an instruction in which the packet length holding FIFO queue 18 reads out the value indicative of the held packet length, and an instruction in which the packet writing beginning bank holding FIFO queue 19 reads out the value of the W_Bank signal corresponding to one packet when the head data of the packet is input. When the queue reading signal is "1", the packet length holding FIFO queue 18 reads out the value indicative of the held packet length. When the queue reading signal is "1", the packet writing beginning bank holding FIFO queue 19 reads out the value of the W_Bank signal corresponding to one packet when the head data of the packet is input. On the other hand, when the queue reading signal is "0", the packet length holding FIFO queue 18 does not read out the value indicative of the held packet length. When the queue reading signal is "0", the packet writing beginning bank holding FIFO queue 19 does not read out the value of the W_Bank signal when the head data of the packet is input.

The packet writing control circuit 15 further includes a counter 15A. When writing of the packet is not performed, the counter 15A indicates "0". When writing of the packet is begun, the counter 15A increments from "1" for each cycle. When the counted value of the counter 15A is identical with the value of the packet length of the packet input from the packet input terminal 2, writing of the packet corresponding to the value of the packet length is completed. When writing of the packet is completed, the counted value of the counter 15A is returned to "0". Here, when the counted value of the counter 15A is identical with the value of the packet length of the packet input from the packet input terminal 2, and the packet writing control circuit 15 inputs a value of the packet length of a next packet, the packet writing control circuit 15 does not return the counted value of the counter 15A to "0", and sets "1" to the counter 15A. Thereby, even when a plurality of packets arrives without a space between the packets, it is possible to write in the packets continuously. When the counted value of the counter 15A is large than "0" and is an even number, the packet writing control circuit 15 increments the write pointer 13 by 1. Thereby, when writing of the packet for two banks is performed, the write pointer 13 increments by 1, i.e., the address of the bank which the write pointer 13 indicates is incremented by 1. In addition, when the counted value of the counter 15A is identical with the value of the packet length written in the packet length holding FIFO queue 18, the packet writing control circuit 15 also increments the write pointer 13 by 1. Thereby, when the packet length is an odd cycle length, writing of the packet is performed only to one of the banks, and the write pointer 13 is incremented by 1.

The packet reading control circuit 16 includes a counter 16A. When reading of the packet is not performed, the counter 16A indicates "0". When reading of the packet is decided, the counter 16A increments from "1" for each cycle. When the counted value of the counter 16A is identical with the value of the packet length read out from the packet length holding FIFO queue 18, reading of the packet corresponding to the value of the packet length is completed. When reading of the packet is completed, the counted value of the counter 16A is returned to "0". Here, when the counted value of the counter 16A is identical with the value of the packet length read out from the packet length holding FIFO queue 18, and there is a next packet to be read out, the packet reading control circuit 16 does not return the counted value of the counter 16A to "0", and sets "1" to the counter 16A. Thereby, no space between the packets occurs, and hence reading of the packets is continuously performed.

When the counted value of the counter 16A is large than "0" and is an even number, the packet reading control circuit 16 increments the read pointer 14 by 1. Thereby, when reading of the packet for two banks is performed, the read pointer 14 increments by 1, i.e., the address of the bank which the read pointer 14 indicates is incremented by 1.

In addition, when the counted value of the counter 16A is identical with the value of the packet length read out from the packet length holding FIFO queue 18, the counted value of the counter 16A also increments the read pointer 14 by 1. Thereby, when the packet length is an odd cycle length, the packet is read out only from one of the banks, and the read pointer 14 is incremented by 1.

The packet reading control circuit 16 outputs a reading valid signal to the output circuit 28 of FIG. 1. The reading valid signal indicates a period when reading of the packet is effective by "1", and a period when reading of the packet is ineffective by "0". When the counted value of the counter 16A is larger than "0", the packet reading control circuit 16 sets the reading valid signal to "1". Thereby, in the period when reading of the packet is effective, the packet read out from any one of the banks reaches a packet output terminal 3 via the output circuit 28. When reading of the packet is not performed, the counted value of the counter 16A is "0". In this case, the packet reading control circuit 16 sets the reading valid signal to "0".

The output circuit 28 is provided between the selector 27 and the packet output terminal 2. The output circuit 28 inputs the output from the selector 27 and the reading valid signal from the packet reading control circuit 16. When the reading valid signal from the packet reading control circuit 16 is "0", i.e., reading of the packet is not performed, the output circuit 28 outputs "0". By doing so, when reading of the packet is not performed, an unjust value which comes out from the RAM 11 or 12 is not output. When the reading valid signal from the packet reading control circuit 16 is not "0", i.e., reading of the packet is performed, the output circuit 28 outputs the actual data of the packet read out from any one of the banks.

In FIG. 1, a packet transmission destination device 60 is provided on the outside of the FIFO buffer 1. The packet transmission destination device 60 is a memory, a CPU (Central Processing unit), not shown, and so on. The packet transmission destination device 60 is connected to the packet reading control circuit 16 and the packet output terminal 3 of the FIFO buffer 1. The packet transmission destination device 60 outputs a transmission destination busy signal indicating whether to permit transmission of the packet, to the packet reading control circuit 16. In the present embodiment, when the transmission destination busy signal is "0", the packet transmission destination device 60 permits transmission of the packet. When the transmission destination busy signal is "1", the packet transmission destination device 60 does not permit transmission of the packet. In addition, the packet transmission destination device 60 receives the packet stored into the packet storage buffer 10.

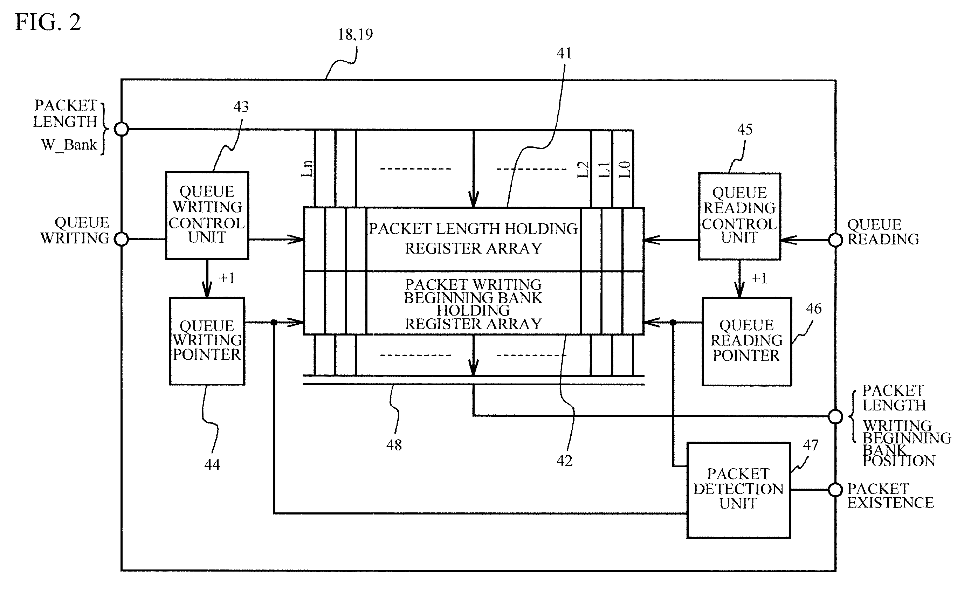

FIG. 2 is a diagram illustrating detailed configuration of the packet length holding FIFO queue 18 and the packet writing beginning bank holding FIFO queue 19. Each of the queues has FIFO structure.

The packet length holding FIFO queue 18 includes a packet length holding register array 41 (a second storage element). The packet writing beginning bank holding FIFO queue 19 includes a packet writing beginning bank holding register array 42 (a first storage element). Each of the packet length holding FIFO queue 18 and the packet writing beginning bank holding FIFO queue 19 includes a queue writing control unit 43, a queue writing pointer 44, and a queue reading control unit 45. In addition, each of the packet length holding FIFO queue 18 and the packet writing beginning bank holding FIFO queue 19 includes a queue reading pointer 46, a packet detection unit 47, and a selector 48. The queue writing control unit 43 and the queue reading control unit 45 perform the same control to both of the packet length holding register array 41 and the packet writing beginning bank holding register array 42.

The packet length holding register array 41 holds a value of the packet length of the packet to be stored into the packet storage buffer 10. The packet writing beginning bank holding register array 42 holds a value of the W_Bank signal when the head data of the packet is input, i.e., information indicative of a position of the bank in which writing of the packet is begun. The packet length holding register array 41 and the packet writing beginning bank holding register array 42 are composed of storage elements which can perform writing, and reading a value to be currently read out within one cycle. It is considered that a flip-flop is used as the storage element, for example. According to the configuration, the packet length holding register array 41 and the packet writing beginning bank holding register array 42 have FIFO structure that can perform writing and reading of data within one cycle. In FIG. 2, the number of stages of the packet length holding register array 41 and the packet writing beginning bank holding register array 42 having the FIFO structure is indicated by "L0" to "Ln" (n=0, 1, 2,...). Moreover, the number of stages of the packet length holding register array 41 and the packet writing beginning bank holding register array 42 is the same as a maximum number of packets which the FIFO buffer 1 can receive.

The packet length holding register array 41 is composed of a bit width necessary to express a length of a packet which may be inputted. When the queue writing signal, which is output from the packet writing control circuit 15, for holding the value indicative of the packet length included in the head data of the packet is a cycle "1", the packet length holding register array 41 saves the value of the packet length of the packet to be stored into the packet storage buffer 10, as a packet length signal for each packet according to writing control from the queue writing control unit 43. In addition, the packet length holding register array 41 outputs the value of the packet length saved in the head of the packet length holding register array 41 as the packet length signal.

The packet writing beginning bank holding register array 42 is composed of a bit width necessary to express bank information. When the queue writing signal, which is output from the packet writing control circuit 15, for holding the value of the W_Bank signal when the head data of the packet is input is a cycle "1", the packet writing beginning bank holding register array 42 saves the value of the W_Bank signal as a writing beginning bank position signal according to the writing control from the queue writing control unit 43. In addition, the packet writing beginning bank holding register array 42 outputs the value of the packet length saved in the head of the packet writing beginning bank holding register array 42 as the writing beginning bank position signal.

The queue writing control unit 43 performs the writing control of the value of the packet length to the packet length holding register array 41 and performs the writing control of the value of the W_Bank signal to the packet writing beginning bank holding register array 42, according to the queue writing pointer 44. The queue writing pointer 44 decides writing positions of the values of the packet length and the W_Bank signal. When the values of the packet length and the W_Bank signal corresponding to one packet are written in the packet length holding register array 41 and the packet writing beginning bank holding register array 42, respectively, the queue writing pointer 44 increments by 1.

When the queue reading signal output from the packet reading control circuit 16 is the cycle "1", the queue reading control unit 45 performs reading control of the value of the packet length from the packet length holding register array 41, according to the queue reading pointer 46. At the same time, the queue reading control unit 45 performs reading control of the value of the W_Bank signal from the packet writing beginning bank holding register array 42. The queue reading pointer 46 decides reading positions of the values of the packet length and the W_Bank signal. When the values of the packet length and the W_Bank signal corresponding to one packet are read out from the packet length holding register array 41 and the packet writing beginning bank holding register array 42, respectively, the queue reading pointer 46 increments by 1.

The packet detection unit 47 compares a value which the queue writing pointer 44 holds with a value which the queue reading pointer 46 holds. The packet detection unit 47 outputs a packet existence signal indicating existence or nonexistence of the value of the packet length in the packet length holding register array 41 and the value of the W_Bank signal in the packet writing beginning bank holding register array 42, to the packet reading control circuit 16 according to a result of the comparison. When the number of writings is larger than the number of readings, i.e., there is actually a packet in the packet storage buffer 10, the packet existence signal is "1. On the other hand, when the number of writings is the same as the number of readings, i.e., the packet length holding register array 41 and the packet writing beginning bank holding register array 42 are blank, the packet existence signal is "0". The packet existence signal is used as one of preconditions in which the packet reading control circuit 16 begins reading of the packet. Specifically, when the packet existence signal is "1" and given conditions described later are satisfied, the packet reading control circuit 16 begins reading control of the packet. When the packet existence signal is "0", preconditions for beginning reading of the packet are not satisfied, and hence the packet reading control circuit 16 does not perform reading control of the packet.

The selector 48 selects the value of the packet length in the packet length holding register array 41 and the value of the W_Bank signal in the packet writing beginning bank holding register array 42 according to reading positions of the packet length holding register array 41 and the packet writing beginning bank holding register array 42 decided by the queue reading pointer 46. Then, the selector 48 outputs the value of the selected packet length to the packet reading control circuit 16 as the packet length signal and outputs the value of the selected W_Bank signal to the packet reading control circuit 16 as a writing beginning bank position signal. For example, when the value of the queue reading pointer 46 is "2", the selector 48 selects the value of the packet length in "L2" of the packet length holding register array 41 and the value of the W_Bank signal in "L2" of the packet writing beginning bank holding register array 42, and outputs the values to the packet reading control circuit 16.

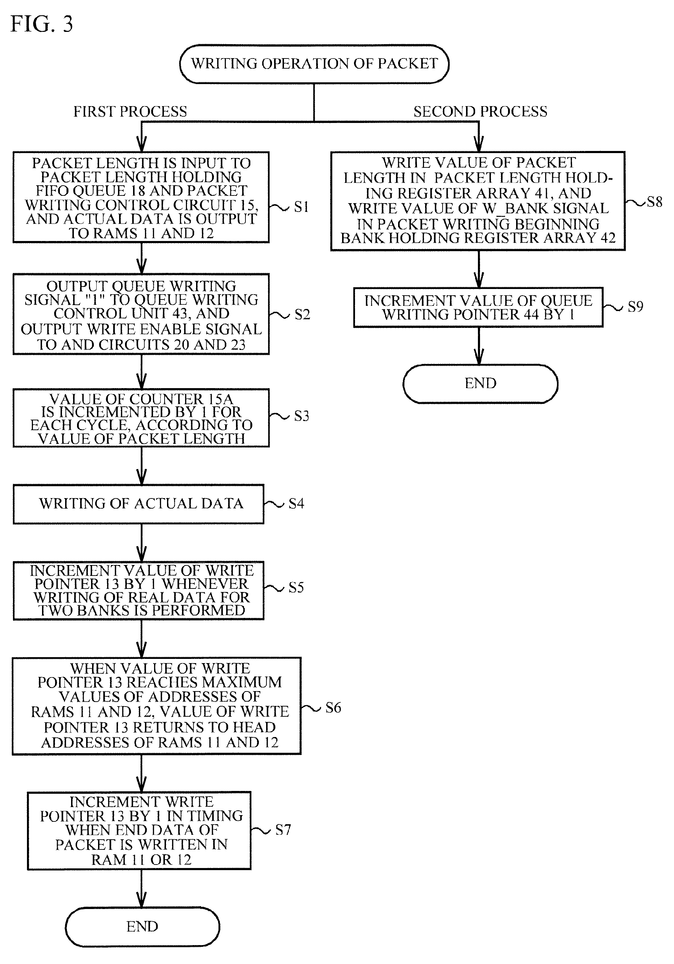

FIG. 3 is a flowchart illustrating writing operation of the packet. In the flowchart, a description will be separately given of a first process in which the actual data of the packet is written in any one of the RAMs 11 and 12, and a second process in which the value of the packet length and the value of the W_Bank signal are stored into the packet length holding register array 41 and the packet writing beginning bank holding register array 42, respectively.

It is assumed that the bank switch 17 outputs the W_Bank signal (specifically, 0 or 1) to the detection circuits 21, 24 and 26, and the packet writing beginning bank holding FIFO queue 19.

(First Process) When a packet is input from the packet input terminal 2, a value of the packet length of the input packet is input to the packet length holding FIFO queue 18 and the packet writing control circuit 15, and the actual data of the packet is output to the RAMs 11 and 12 (step S1).

The packet writing control circuit 15 outputs the queue writing signal "1" to the queue writing control unit 43 and outputs the write enable signal to the AND circuits 20 and 23 based on the input of the value of the packet length (step S2). The counter 15A of the packet writing control circuit 15 increments by 1 for each cycle, according to the value of the packet length (step S3).

The actual data of the packet is written in any one of the RAMs 11 and 12 according to an address of the RAM designated by the write pointer 13 and a bank of the writable RAM indicated by the value of the W_Bank signal (step S4).

When the counted value of the counter 15A is larger than "0" and is an even number, i.e., whenever writing of the actual data of the packet for two banks is performed, the packet writing control circuit 15 increments a value of the write pointer 13 by 1 (step S5). The process of step S5 is repeated for necessary cycles, according to the packet length of the inputted packet. The value of the write pointer 13 is used as a writing address of the RAM 11 or 12.

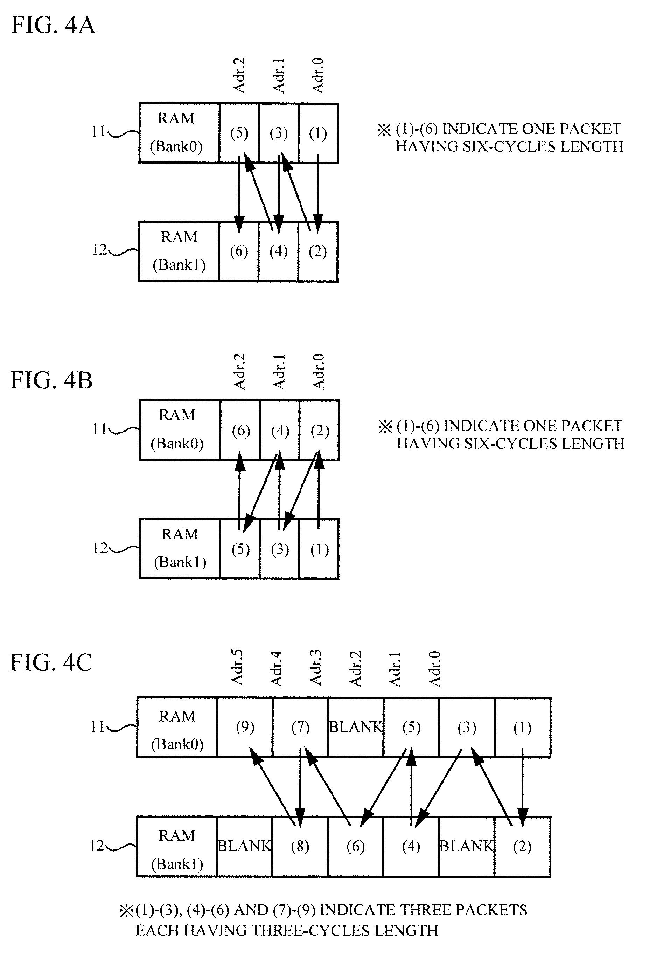

Here, a description will be given of an example in which a packet having a six-cycles length is written in the RAMs 11 and 12, with the use of FIGs. 4A and 4B. FIG. 4A illustrates an example in which the packet having the six-cycles length is input from the packet input terminal 2 and written in the RAMs 11 and 12 when the W_Bank signal is "0". FIG. 4B illustrates an example in which the packet having the six-cycles length is input from the packet input terminal 2 and written in the RAMs 11 and 12 when the W_Bank signal is "1 ".

In FIG. 4A, when the W_Bank signal is "0", the packet having the six-cycles length is input from the packet input terminal 2. Therefore, the head data of the packet is written in an address "Adr. 0" of the RAM 11 (Bank 0). Second cycle data of the packet is written in an address "Adr. 0" of the RAM 12 (Bank 1). At this time, since the packets are written for two banks, the value of the write pointer 13 is incremented by 1, as illustrated in step S5. Therefore, third cycle data of the packet is written in an address "Adr. 1" of the RAM 11 (Bank 0). Similarly, fourth cycle data of the packet is written in an address "Adr. 1" of the RAM 12 (Bank 1), and then the value of the write pointer 13 is incremented by 1. Fifth cycle data of the packet is written in an address "Adr. 2" of the RAM 11 (Bank 0).

In FIG. 4B, when the W_Bank signal is "1", the packet having the six-cycles length is input from the packet input terminal 2. Therefore, the head data of the packet is written in an address "Adr. 0" of the RAM 12 (Bank 1). Second cycle data of the packet is written in an address "Adr. 0" of the RAM 11 (Bank 0). At this time, since the packets are written for two banks, the value of the write pointer 13 is incremented by 1, as illustrated in step S5. Therefore, third cycle data of the packet is written in an address "Adr. 1" of the RAM 12 (Bank 1). Similarly, fourth cycle data of the packet is written in an address "Adr. 1" of the RAM 11 (Bank 0), and then the value of the write pointer 13 is incremented by 1. Fifth cycle data of the packet is written in an address "Adr. 2" of the RAM 12 (Bank 1).

Referring again to FIG. 3, when the value of the write pointer 13 reaches maximum values of the addresses of the RAMs 11 and 12, the value of the write pointer 13 returns to the head addresses of the RAMs 11 and 12 (step S6). For example, when each maximum value of the addresses of the RAMs 11 and 12 is "99", and the value of the write pointer 13 reaches "99", the value of the write pointer 13 returns to "0", i.e., the head address. The generation of the write enable signal corresponding to the packet length and the generation of increment timing of the write pointer 13 are performed by the packet writing control circuit 15.

Moreover, the packet writing control circuit 15 increments the write pointer 13 by 1 in timing when the end data of the input packet is written in the RAM 11 or 12 (step S7). The address incremented by 1 with the write pointer 13 becomes a writing beginning address of a next packet. For example, in FIG. 4C, the packets having an odd cycle length (e.g. three-cycles length) are written in the RAM 11 or 12. In case of FIG. 4C, in timing when the end data (e.g. data (3) of Adr. 1 and data (9) of Adr. 5) of the packets are written in the RAM 11 (Bank 0), the packet writing control circuit 15 writes nothing in another RAM 12 (Bank 1) and increments the write pointer 13 by 1. The addresses Adr. 1 and Adr. 5 of the RAM 12 (Bank 1) in which the packets are not written become blank spaces. Similarly, in timing when the end data (e.g. data (6) of Adr. 3) of the packets is written in the RAM 12 (Bank 1), the packet writing control circuit 15 writes nothing in another RAM 11 (Bank 0) and increments the write pointer 13 by 1. The address Adr. 3 of the RAM 11 (Bank 0) in which the packets are not written become a blank space. Here, FIG. 4C illustrates an example in which three packets each having three-cycles length are written in the RAMs 11 and 12.

(Second Process) The queue writing control unit 43 writes the value of the packet length in a position of the packet length holding register array 41 decided by the queue writing pointer 44. At the same time, the queue writing control unit 43 writes the value of the W_bank signal when the head data of the packet is input, in a position of the packet writing beginning bank holding register array 42 decided by the queue writing pointer 44 (step S8). Writing of the value of the packet length and the value of the W_Bank signal is performed in timing when the head data of the packet is input from the packet input terminal 2. Then, the queue writing control unit 43 increments the value of the queue writing pointer 44 by 1 (step S9). Here, the process of steps S8 and S9 is performed whenever one packet is input from the packet input terminal 2.

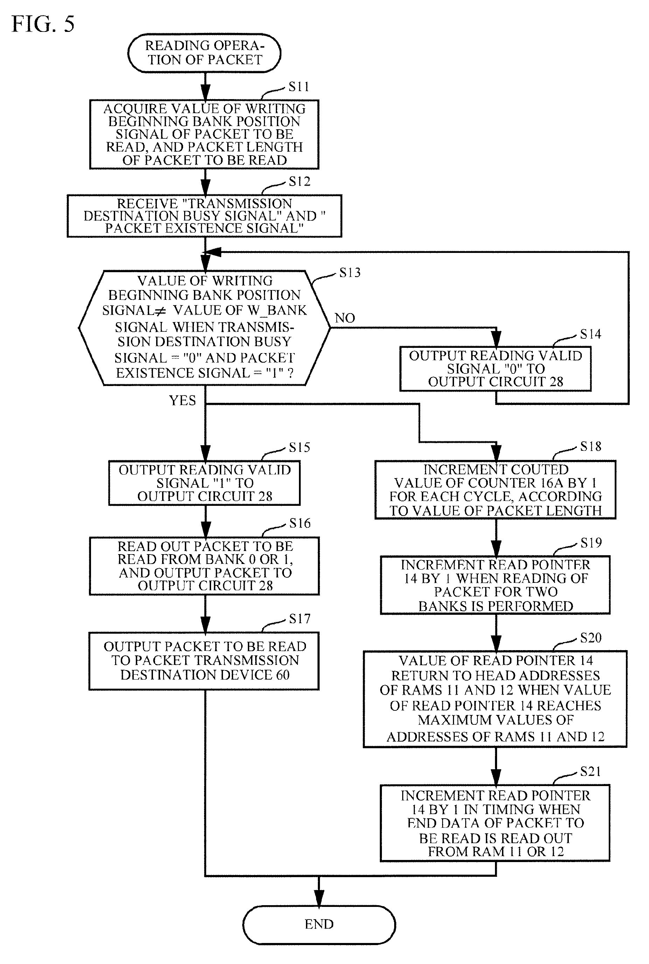

FIG. 5 is a flowchart illustrating reading operation of the packet.

First, the packet reading control circuit 16 acquires a value of the writing beginning bank position signal of the packet to be read from the packet writing beginning bank holding register array 42, and the packet length of the packet to be read from the packet length holding register array 41 (step S11). Here, the queue reading control unit 45 performs reading control of the value of the writing beginning bank position signal of the packet to be read and the packet length of the packet to be read. The reading position is decided by the queue reading pointer 46. When the selector 48 reads out the value of the writing beginning bank position signal of one packet to be read and the packet length of one packet to be read, the queue reading control unit 45 increments the queue reading pointer 46 by 1.

Next, the packet reading control circuit 16 receives the transmission destination busy signal from the packet transmission destination device 60, and the packet existence signal from the packet detection unit 47 (step S12).

When the transmission destination busy signal is "0" (i.e., the packet transmission destination device 60 permits the transmission of the packet), and the packet existence signal is "1", the packet reading control circuit 16 determines whether the value of the writing beginning bank position signal of the packet to be read is in discord with the value of the W_Bank signal (step S13). When the value of the writing beginning bank position signal is in discord with the value of the W_Bank signal, the actual data of the packet can be read out from the RAM (Bank) indicated by the W_Bank signal.

When the determination of step S 13 is NO, i.e., the value of the writing beginning bank position signal of the packet to be read is identical with the value of the W_Bank signal, the bank into which the packet to be read is stored is in a state where the packet cannot be read out, and hence the packet reading control circuit 16 outputs the reading valid signal "0" to the output circuit 28 (step S14). Thereby, the output circuit 28 is notified that timing is not an effective period for reading of the packet, and reading of the packet from the bank into which the packet to be read is stored is not performed. The process returns to step S13.

When the determination of step S 13 is YES, i.e., the value of the writing beginning bank position signal of the packet to be read is in discord with the value of the W_Bank signal, the bank into which the packet to be read is stored is in a state where the packet can be read out, and hence the packet reading control circuit 16 outputs the reading valid signal "1" to the output circuit 28 (step S15). Thereby, the output circuit 28 is notified that timing is an effective period for reading of the packet. When the value of the W_Bank signal corresponding to a cycle subsequent to a cycle in which the determination of step S 13 is performed is input to the detection circuit 26, the selector 27 reads out the packet to be read from the bank 0 (RAM 11) or the bank 1 (RAM 12) based on an output value from the detection circuit 26, and outputs the packet to the output circuit 28 (step S 16). The output circuit inputs the packet to be read and outputs the packet to the packet transmission destination device 60 via the packet output terminal 3 (step S 17).

In addition, when the determination of step S13 is YES, the counter 16A increments by 1 for each cycle, according to the value of the packet length (step S 18). When the counted value of the counter 16A is larger than "0" and is an even number, i.e., reading of the packet for two banks is performed, the packet reading control circuit 16 increments the read pointer 14 by 1 (step S 19). The value of the read pointer 14 incremented by 1 indicates an address of the packet to be read, and is output to the bank into which the packet to be read is stored. The process of step S 19 is repeated for necessary cycles, according to the value of the packet length of the packet to be read. When the value of the read pointer 14 reaches maximum values of the addresses of the RAMs 11 and 12, the value of the read pointer 14 returns to the head addresses of the RAMs 11 and 12 (step S20). For example, when each maximum value of the addresses of the RAMs 11 and 12 is "99", and the value of the read pointer 14 reaches "99", the value of the read pointer 14 returns to "0", i.e., the head address.

When the counted value of the counter 16A is identical with the value of the packet length read out from to the packet length holding FIFO queue 18, i.e., in timing when the end data of the packet to be read is read out from the RAM 11 or 12, the packet reading control circuit 16 increments the read pointer 14 by 1 (step S21). Thereby, when the packet length is an odd cycle length, only reading of the packet from one of the banks is performed, and the read pointer 14 is incremented by 1. That is, the blank spaces generated in any one of the banks in time of writing are not read out.

When reading of one packet to be read is completed in the process of steps S11 to S21, the process of steps S11 to S21 is repeated so that reading of the packet to be subsequently read is performed.

The writing operation of the packet of FIG. 3 and the reading operation of the packet of FIG. 5 as described above are repeatedly performed, and hence the function of the FIFO buffer using two RAMs is achieved.

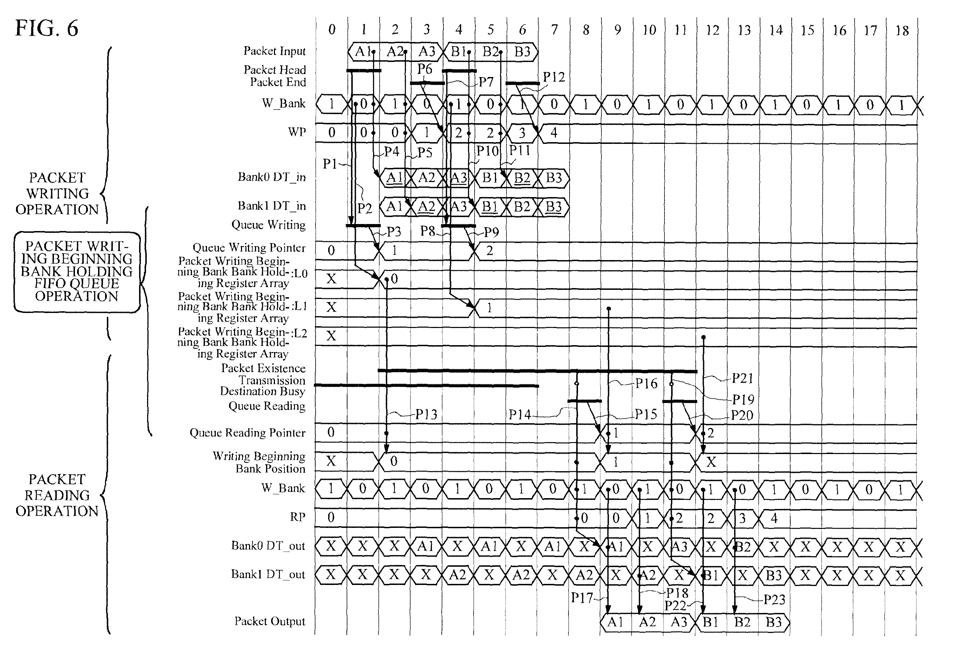

FIG. 6 is a timing chart illustrating packet writing operation and packet reading operation when two packets each having a three-cycles length are continuously input. In the RAMs 11 and 12, data on a defined address in the RAM 11 or 12 is output from the DT_out port at a cycle subsequent to a cycle in which the write enable signal "0" from the packet writing control circuit 15 and the Adrs (address) of the RAM 11 or 12 are defined.

First, a description will be given of the packet writing operation. Each of numbers "0" to "18" in the highest stage of FIG. 6 illustrates a cycle number. In FIG. 6, two packets each of which has three cycles (A1 to A3, B1 to B3) are input to the packet input terminal 2. In a first cycle in which head data A1 of the packet A1 to A3 is input from the packet input terminal 2, the packet writing control circuit 15 outputs the queue writing signal "1" to the packet length holding FIFO queue 18 and the packet writing beginning bank holding FIFO queue 19 (P 1). Since the W_Bank signal is "0" in the first cycle, the L0 of the packet writing beginning bank holding register array 42 holds "0" in a second cycle (P2). The queue writing control unit 43 increments the queue writing pointer 44 by 1 in subsequent timing in which the queue writing signal "1" is input, i.e., in the second cycle (P3).

Since the W_Bank signal is "0" and the address WP of the write pointer 13 is "0" in the first cycle, head data A1 is written in the address "0" of the bank "0" in the second cycle (P4). In Bank 0 DT_in or Bank 1 DT_in of FIG. 6, underlines are added to actual written data. In the second cycle in which data A2 is input from the packet input terminal 2, the W_Bank signal is "1" and the address WP of the write pointer 13 is "0", and hence the data A2 is written in the address "0" of the bank 1 in a third cycle (P5). Since writing schedule of the data for two banks is completed in the second cycle, the packet writing control circuit 15 increments the write pointer 13 by 1 in the third cycle. In the third cycle in which end data A3 is input from the packet input terminal 2, the W_Bank signal is "0" and the address WP of the write pointer 13 is "1", and hence the end data A3 is written in the address "1" of the bank 0 in a fourth cycle.

In the fourth cycle subsequent to the cycle in which end data A3 is input, the packet writing control circuit 15 increments the write pointer 13 by 1 (P6). This is because when the end data of the packet is written in one of the banks as illustrated in FIG. 4C, the packet writing control circuit 15 writes nothing in another bank and increments the write pointer 13 by 1.

Next, in the fourth cycle in which the head data B1 of the packet B1 to B3 is input from the packet input terminal 2, the packet writing control circuit 15 outputs the queue writing signal "1" to the packet length holding FIFO queue 18 and the packet writing beginning bank holding FIFO queue 19 (P7). In the fourth cycle in which the head data B1 is input from the packet input terminal 2, the W_Bank signal is "1", and hence the L1 of the packet writing beginning bank holding register array 42 holds "1" in a fifth cycle (P8). Moreover, the queue writing control unit 43 increments the queue writing pointer 44 by 1 in the fifth cycle (P9).

In the fourth cycle in which the head data B1 is input from the packet input terminal 2, the W_Bank signal is "1" and the address WP of the write pointer 13 is "2", and hence the head data B1 is written in the address "2" of the bank 1 in the fifth cycle (P10). In the fifth cycle in which the data B2 is input from the packet input terminal 2, the W_Bank signal is "0" and the address WP of the write pointer 13 is "2", and hence the data B2 is written in the address "2" of the bank 0 in a sixth cycle (P11). Since writing schedule of the data for two banks is completed in the fifth cycle, the packet writing control circuit 15 increments the write pointer 13 by 1 in the sixth cycle. In the sixth cycle in which the end data B3 is input from the packet input terminal 2, the W_Bank signal is "1" and the address WP of the write pointer 13 is "3", and hence the end data B3 is written in the address "3" of the bank 1 in a seventh cycle. The packet writing control circuit 15 increments the write pointer 13 by 1 in the seventh cycle (P12).

First, a description will be given of the packet reading operation. In FIG. 6, the packet existence signal is "1" from the second cycle to an eleventh cycle. It is assumed that the transmission destination busy signal is "1" from the zero cycle to the sixth cycle.

When the queue reading pointer 46 is "0", the selector 48 reads out "0" stored into the L0 of the packet writing beginning bank holding register array, and outputs it to the packet reading control circuit 16 as the writing beginning bank position signal (P13).

In an eighth cycle, the transmission destination busy signal is "0" and the packet existence signal is "1", and further the value "0" of the writing beginning bank position signal is discord with the value "1" of the W_Bank signal. Since in the eighth cycle, the value of the W_Bank signal is "1", the bank that can read out the packet is the bank 0. Since the Address RP of the read pointer 14 is "0", the packet can be read out from the address "0" of the bank. The packet reading control circuit 16 begins control for reading out the head data A1 of the packet A1 to A3 from the address "0" of the bank 0 (P14). Here, the selector 27 and the reading valid signal from the packet reading control circuit 16 are controlled in conformity with the head data A1 which delays by one cycle and is output. That is, reading of the head data A1 of the packet A1 to A3 is begun in the eighth cycle, and the head data A1 is output in a ninth cycle. In the eighth cycle, the packet reading control circuit 16 outputs the queue reading signal "1" to the queue reading control unit 45 (P15). The queue reading control unit 45 increments the queue reading pointer 46 by 1 in the ninth cycle.

Since in the ninth cycle, the queue reading pointer 46 is "1", the selector 48 reads out "1" stored into the L1 of the packet writing beginning bank holding register array, and outputs it to the packet reading control circuit 16 as the writing beginning bank position signal (P16). Since in the ninth cycle, reading out the head data A1 from the address "0" is already decided and the value of the W_Bank signal is "0", the head data A1 is read out from the address "0" of the bank 0 (P17). Since in a tenth cycle, the W_Bank signal is "1", the next dataA2 is read out from the address "0" of the bank 1 (P18). At this time, since reading schedule of the data for two banks is completed, the packet reading control circuit 16 increments the read pointer 14 by 1. In an eleventh cycle, the end data A3 is read out from the address "1" of the bank 0.

In the eleventh cycle, the transmission destination busy signal is "0" and the packet existence signal is "1", and further the value "1" of the writing beginning bank position signal is discord with the value "0" of the W_Bank signal. Since in the eleventh cycle, the value of the W_Bank signal is "0", the bank that can read out the packet is the bank 1. Since the Address RP of the read pointer 14 is "2", the packet can be read out from the address "2" of the bank. The packet reading control circuit 16 begins control for reading out the head data B1 of the packet B1 to B3 from the address "2" of the bank 1 (P19). Here, the selector 27 and the reading valid signal from the packet reading control circuit 16 are controlled in conformity with the head data B1 which delays by one cycle and is output. That is, reading of the head data B1 of the packet B1 to B3 is begun in the eleventh cycle, and the head data B1 is output in a twelfth cycle. In the eleventh cycle, the packet reading control circuit 16 outputs the queue reading signal "1" to the queue reading control unit 45 (P20). The queue reading control unit 45 increments the queue reading pointer 46 by 1 in the twelfth cycle.

Since in the twelfth cycle, the queue reading pointer 46 is "2", the selector 48 reads out "x (indefiniteness)" stored into the "L2" of the packet writing beginning bank holding register array, and outputs it to the packet reading control circuit 16 as the writing beginning bank position signal (P21). Since in the twelfth cycle, reading out the head data B1 from the address "2" is already decided and the value of the W_Bank signal is "1", the head data B1 is read out from the address "2" of the bank 1 (P22). Since in a thirteenth cycle, the W_Bank signal is "0", the next data B2 is read out from the address "2" of the bank 0 (P23). At this time, since reading schedule of the data for two banks is completed, the packet writing control circuit 15 increments the read pointer 14 by 1. In a fourteenth cycle, the end data B3 is read out from the address "3" of the bank 1.

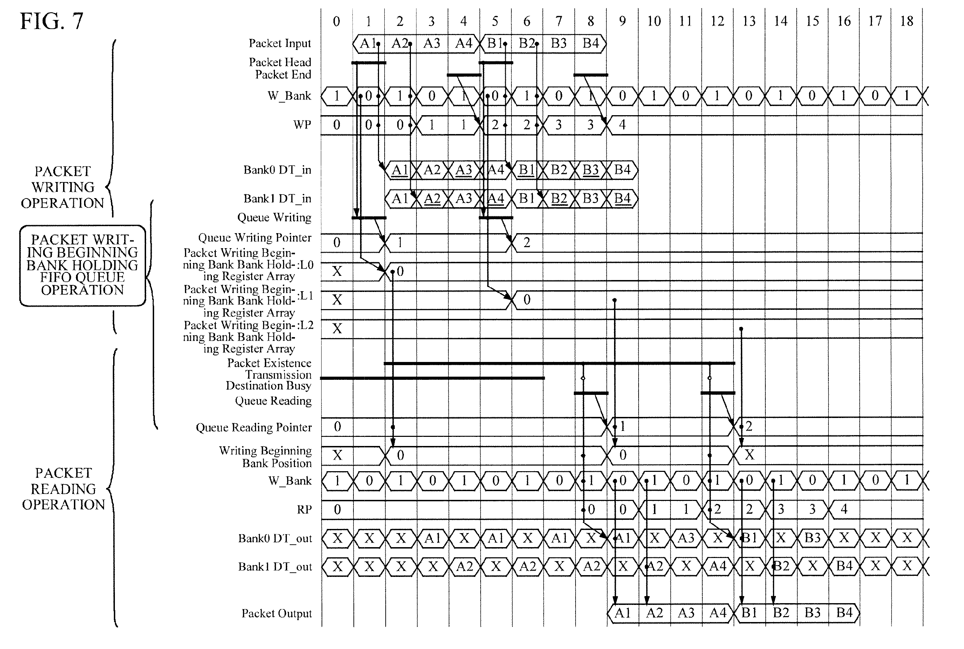

FIG. 7 is a timing chart illustrating packet writing operation and packet reading operation when two packets each having a four-cycles length are continuously input.

In the packet writing operation of FIG. 6, when the end data of the packet having the three-cycles length is written in one of the banks, the packet writing control circuit 15 writes nothing in another bank and increments the write pointer 13 by 1. On the contrary, in the packet writing operation of FIG. 7, when the end data of the packet having the four-cycles length is written in one of the banks, data prior to the end data is already written in another bank. Therefore, the packet writing operation of FIG. 7 differs from that of FIG. 6 in that the packet writing control circuit 15 does not increment the write pointer 13 by 1 without writing anything in another bank.

Moreover, when in the packet reading operation of FIG. 6, the end data of the packet having the three-cycles length is read out from one of the banks, the packet reading control circuit 16 increments the read pointer 14 by 1 so as not to read out another bank in which nothing is written. On the contrary, when in the packet writing operation of FIG. 7, the end data of the packet having the four-cycles length is read out from one of the banks, the data prior to the end data is already read out from another bank. Therefore, the packet reading operation of FIG. 7 differs from that of FIG. 6 in that the packet reading control circuit 16 does not increment the read pointer 14 by 1 so as not to read out another bank in which nothing is written.

For the rest, the packet writing operation and the packet reading operation of FIG. 7 are the same as those of FIG. 6, and a description thereof will be omitted

As described above, according to the present embodiment, the bank switch 17 outputs the W_Bank signal indicative of the bank capable of writing the packet therein. The packet writing control circuit 15 performs writing control of the packet to be written to the memory indicated by the W_Bank signal when the packet to be written is input. The packet writing beginning bank holding FIFO queue 19 holds the W_Bank signal that is output from the bank switch 17 and indicates the RAM in which the head data of the packet to be written is written, according to the queue writing signal "1" from the packet writing control circuit 15. Therefore, since the FIFO buffer 1 writes the packet input from the packet input terminal 2 in any one of the banks without adjusting writing timing of the packet input from the packet input terminal 2, it is possible to reduce delay time for writing.

In addition, the W_Bank signal that is held in the packet writing beginning bank holding FIFO queue 19 and indicates the RAM in which the head data of the packet to be written is written is used when the packet to be written is read out. Therefore, the packet written in the RAM can be read out exactly.

Since the FIFO buffer 1 uses the RAMs 11 and 12, a storage capacity per an unit area can be increased, compared to a FIFO buffer using flip-flop circuits.

In the present embodiment, the extendable packet to which a value of data length is added is used as the packet. However, even when a fixed-length packet to which the value of data length is not added is input from the packet input terminal 2, if the packet length holding FIFO queue 18 is adapted to output the fixed data length, the FIFO buffer 1 can handle the fixed-length packet to which the value of data length is not added.

Although the FIFO buffer 1 includes two banks, i.e., two RAMs, the FIFO buffer 1 may include two or more banks.

### EXPLANATION OF REFERENCES

- 1: FIFO buffer
- 11, 12: RAM (Random Access Memory)
- 13: write pointer
- 14: read pointer
- 15: packet writing control circuit
- 16: packet reading control circuit
- 17: bank switch
- 18: packet length holding FIFO queue
- 19: packet writing beginning bank holding FIFO queue

## Claims

1. A first-in first-out buffer **characterized by** comprising:
a memory set capable of writing and reading data within one cycle by combining a plurality of memories, each memory performing any one of writing and reading of data within one cycle;
an output means that outputs a first signal indicating a memory included in the memory set, the memory being capable of writing data;
a writing control means that performs writing control of data to be written to the memory indicated by the first signal when the data to be written is inputted; and
a first holding means that, in accordance with an instruction from the writing control means, holds the first signal that is outputted from the output means and indicates the memory in which head data of the data to be written is written.

2. The first-in first-out buffer as claimed in claim 1, **characterized by** comprising a reading control means that performs reading control of data written in each memory included in the memory set on the basis of a value of the first signal outputted from the output means when the data written in the each memory is read out, and a value of the first signal held by the first holding means.

3. The first-in first-out buffer as claimed in claim 2, **characterized by** comprising a second holding means that holds a length of the data to be written,
wherein the reading control means performs reading control of data written in the each memory on the basis of the length of the data held by the second holding means, the value of the first signal outputted from the output means when the data written in the each memory is read out, and the value of the first signal held by the first holding means.

4. The first-in first-out buffer as claimed in claim 3, **characterized in that**, when an external device permits transmission of the data written in the each memory, a value of the first signal corresponding to data to be currently read out is held by the first holding means and a length of the data to be currently read out is held by the second holding means, the reading control means performs reading control of data written in the each memory.

5. The first-in first-out buffer as claimed in claim 3 or 4, **characterized in that** the first holding means performs writing of a value of a new first signal and reading of a value of the first signal corresponding to data to be currently read out within one cycle, and
the second holding means performs writing of a length of new data and reading of a length of data to be currently read out within one cycle.

6. The first-in first-out buffer as claimed in any one of claims 1 to 5, **characterized in that** the plurality of memories included in the memory set are a plurality of random access memories.

7. A method of controlling a first-in first-out buffer including a plurality of memories, the method comprising:
writing head data of input data in a memory indicated by a first signal among the plurality of memories, the first signal being outputted when data is inputted, the first signal indicating a memory, the memory being capable of writing data; and
holding, for each data, a value of the first signal outputted when the data is inputted.

8. The method of controlling the first-in first-out buffer as claimed in claim 7, **characterized by** comprising: reading data to be read out from a memory into which the data to be read out is stored on the basis of a value of the first signal outputted when data is read out, and a value of the first signal held corresponding to the data to be read out.

9. The method of controlling the first-in first-out buffer as claimed in claim 8, **characterized by** comprising: holding a length of the input data; and
reading the data to be read out from the memory into which the data to be read out is stored on the basis of the value of the first signal outputted when data is read out, the value of the first signal held corresponding to the data to be read out, and a data length held corresponding to the data to be read out.

10. The method of controlling the first-in first-out buffer as claimed in claim 9, **characterized by** comprising: reading the data to be read out from the memory into which the data to be read out is stored when an external device permits transmission of the data to be read out, and a value of the first signal corresponding to data to be currently read out and a length of the data to be currently read out are held.
